# EUROPÄISCHE PATENTANMELDUNG

(11) **EP 3 473 869 A1**
(43) Veröffentlichungstag der Anmeldung: **24.04.2019**
(21) Anmeldenummer: 18197867.7
(22) Anmeldetag: 01.10.2018
(51) Int. Cl.: F16B 11/00, A47G 1/16, A47G 1/17, F16B 45/00

(54) **BEFESTIGUNGSSYSTEM MIT SCHALTKULISSENARTIGER FÜHRUNG**

(30) Priorität: 18.10.2017 DE 102017124261
(71) Anmelder: fischerwerke GmbH & Co. KG, 72178 Waldachtal (DE)
(72) Erfinder: Hüglin, Simon, 79336 Herbolzheim (DE); Dienst, Jan, 79369 Wyhl am Kaiserstuhl (DE)
(74) Vertreter: Suchy, Ulrich Johannes

(57) **Zusammenfassung**

Die Erfindung betrifft ein Befestigungssystem (1) mit einer schaltkulissenartigen Führung (6), in welche ein insbesondere hakenartig ausgestaltetes Befestigungselement (8) zum Aufhängen von Bildern und dergleichen, bewegt und rotiert werden kann. Die schaltkulissenartige Führung (6) weist Rastpositionen (12) auf, in welche das Befestigungselement (8) rotations- und translationsgesichert in verschiedene Positionen eingebracht werden kann.

## Beschreibung

Die Erfindung betrifft ein Befestigungssystem mit den Merkmalen des Oberbegriffs des Anspruchs 1.

Ein Befestigungssystem zur positionsvariablen Anbringung eines Objektes, wie beispielsweise eines Bildes, Spiegels, Kalenders oder dergleichen, ist in der Druckschrift US 8 011 635 B2 offenbart. Insbesondere zeigt Figur 3 hierbei ein Befestigungssystem, welches eine Grundplatte mit einem Haken sowie eine Schraube umfasst. Durch die Schraube ist die Grundplatte klemmend an einer Wand gehalten. Dies geschieht durch direktes Eindrehen in beispielsweise eine Holzwand oder durch Eindrehen in einen Dübel, welcher zuvor in eine Wand einzubringen ist. Die Grundplatte ist relativ zu der Schraube verschiebbar und mit der Schraube an der Wand an einer gewünschten Position vorzufixieren. Unter einer "gewünschten Position" ist die Position zu verstehen, in welcher das zu befestigende Objekt angebracht werden soll. Ist eine gewünschte Position erreicht, kann die Schraube festgezogen werden, wodurch die Grundplatte mit dem Haken durch die Schraube klemmend an der Wand gehalten wird. Nachteilig an einem derartigen Befestigungssystem ist, dass, sobald sich die Schraube auch nur geringfügig lockert, die Grundplatte mit einem Haken und somit das daran befestigte Objekt, sich rasch oder zumindest kriechend aus seiner ursprünglichen Position herausbewegt und das befestigte Objekt seine Position relativ zum Untergrund, an welchem das Objekt befestigt ist, verändert.

Aufgabe der Erfindung ist es daher, ein Befestigungssystem zur Befestigung eines Objektes an einem soliden Untergrund, insbesondere einer Wand, vorzuschlagen, welches bei bestimmungsgemäßem Gebrauch das zu befestigende Objekt, unabhängig von einer Spannkraft eines Befestigungselementes, in einer vorgesehenen Position hält und mit welchem eine einfache Justierung des Objektes bezüglich des soliden Untergrunds möglich ist.

Diese Aufgabe wird erfindungsgemäß durch die Merkmale des Anspruchs 1 gelöst. Die Erfindung schlägt ein Befestigungssystem zur insbesondere positionsvariablen Befestigung eines Objektes, insbesondere eines Bildes, Spiegels oder dergleichen, an einem soliden Untergrund, insbesondere einer Wand, vor. Unter "positionsvariabel" soll verstanden werden, dass durch das Befestigungssystem die Position des zu befestigenden Objektes bezüglich des soliden Untergrunds verändert werden kann, nachdem das Befestigungssystem an dem soliden Untergrund angebracht worden ist. Das Befestigungssystem umfasst ein Grundelement, das insbesondere quaderartig ausgestaltet ist, und eine Grundfläche zur Anlage am soliden Untergrund, eine insbesondere parallel zur Grundfläche angeordnete Deckfläche und insbesondere vier, die Grund- und die Deckfläche verbindende Seitenflächen aufweist. Die Höhe aller vier Seitenflächen ist vorzugsweise identisch, wobei die Höhe der Seitenflächen insbesondere um ein Vielfaches geringer ist als eine Seitenlänge der Grund- oder der Deckfläche. Vorzugsweise weist das quaderartige Grundelement einen Radius oder eine Fase an den Übergängen zwischen den Seitenflächen auf. Das Grundelement muss nicht zwangsläufig quaderartig ausgestaltet sein. Eine anderweitige Ausgestaltung, wie beispielsweise eine zylinderartige Struktur, eine dreieckartige oder eine generell mehrkantartige Volumenstruktur, welche eine Grund- und eine Deckfläche aufweist, ist vorstellbar.

Weiter weist das Grundelement eine schaltkulissenartige Führung auf. Unter "schaltkulissenartiger Führung" ist insbesondere mindestens eine erste, zweite und dritte Nut im Grundelement zu verstehen, die insbesondere parallel und äquidistant zueinander, insbesondere parallel zu zwei gegenüberliegenden Seiten des Grundelements und vorzugsweise parallel zur Grund- und/oder Deckfläche des Grundelements verlaufen. Eine vierte Nut, die insbesondere in einem rechten Winkel zu der ersten, zweiten und dritten Nut verläuft und insbesondere das Zentrum der ersten, zweiten und dritten Nut miteinander verbindet, vervollständigt die schaltkulissenartige Führung. Insbesondere bilden die erste und zweite Nut in Verbindung mit der vierten Nut, sowie die zweite und dritte Nut in Verbindung mit der vierten Nut, eine H-Form. Vorzugsweise weisen die erste, zweite, dritte und vierte Nut eine identische Breite und die erste, zweite und dritte Nut, eine identische Länge auf. Die "Vertiefungslängen" entsprechen insbesondere einem Mehrfachen der "Vertiefungsbreiten". Eine Tiefe der Nuten erstreckt sich, beginnend von der Deckfläche des Grundelements, insbesondere in eine Richtung entlang einer Flächennormalen der Grund- und/oder der Deckfläche, in Richtung der Grundfläche des Grundelements, ohne diese jedoch zu durchbrechen. Somit ist die Tiefe der Nuten und damit die Tiefe der schaltkulissenartigen Führung selbst, geringer als insbesondere die Höhe einer Seitenfläche des Grundelements. Weiter weisen die Nuten vorzugsweise eine identische Tiefe im Grundelement auf. Die schaltkulissenartige Führung kann auch derart gestaltet sein, dass diese eine einzelne H-förmige Gestalt annimmt, oder, im Extremfall, sogar nur aus einer einzelnen Nut besteht. Diese Ausgestaltungen sind beispielhaft und ohne den erfindungsgemäßen Gedanken zu verlassen, sind weitere Ausgestaltungen möglich. Die schaltkulissenartige Führung ist vorzugsweise derart im Grundelement angeordnet, dass keine der Nuten eine Seitenfläche des Grundelements durchbricht.

Weiter umfasst das Befestigungssystem ein insbesondere hakenartiges Befestigungselement mit einem Führungselement, wobei das Führungselement in der schaltkulissenartigen Führung des Grundelements verschiebbar geführt ist. Das insbesondere hakenartige Befestigungselement dient zur Aufnahme eines Objektes, wie beispielsweise einem Bild, Spiegel oder dergleichen und ist vorzugsweise derart gestaltet, dass das Führungselement sich zumindest teilweise innerhalb der schaltkulissenartigen Führung und ein Haken des insbesondere hakenartigen Befestigungselements, sich zumindest teilweise außerhalb der Deckfläche des Grundelements befindet. Vorzugsweise erstreckt sich ein Teil des Hakens des insbesondere hakenartigen Befestigungselements in eine Richtung, welche mit der Flächennormalen der Deckfläche und/oder der Grundfläche des Grundelements korrespondiert, und von der Deckfläche abgewandt ist. Insbesondere schließen hierbei der Haken und die Deckfläche einen näherungsweise rechten Winkel ein. Abhängig von dem aufzuhängenden Gegenstand kann es jedoch auch sinnvoll sein, dass der Winkel zwischen Deckfläche und Haken kleiner oder größer als 90° ausgestaltet ist. Das Befestigungselement muss nicht zwangsläufig hakenartig ausgestaltet sein. So kann es auch genügen, wenn an das Führungselement eine Verlängerung angeformt ist, die sich an der Position des Führungselements, über die Deckfläche hinaus, erstreckt. Somit kann das Befestigungselement eine stiftartige Form aufweisen.

Das Führungselement ist in einer Führungsebene in der schaltkulissenartigen Führung des Grundelements verschiebbar und wird von der schaltkulissenartigen Führung gegen eine Bewegung senkrecht hierzu gesichert. Hierbei bestimmen die Längen der Nuten die maximalen Verschiebewege des Führungselements in der schaltkulissenartigen Führung. Die Führungsebene ist vorzugsweise parallel zur Grundfläche und/oder zur Deckfläche des Grundelements orientiert. Weiter korrespondiert das Führungselement, insbesondere eine Breite des Führungselements, die sich insbesondere parallel zur Führungsebene erstreckt, derart mit den Nuten, insbesondere mit den Breiten der Nuten, dass das Führungselement klemmfrei zwischen den einzelnen Nuten bewegt und um eine Achse, welche mit der Flächennormalen der Deckfläche und/oder der Grundfläche korrespondiert, rotiert werden kann.

Kennzeichnend für die Erfindung ist, dass das Befestigungselement durch das Führungselement an einer Rastposition der schaltkulissenartigen Führung einrastbar ist. Unter "einrastbar" ist insbesondere zu verstehen, dass, sobald das Führungselement eine Rastposition erreicht hat, das Befestigungselement seine Position bezüglich des soliden Untergrunds nicht mehr verändert. Vorteilhafterweise weist die schaltkulissenartige Führung mehrere Rastpositionen auf. Die Anzahl der Rastpositionen korrespondiert insbesondere mit der Anzahl der Enden der die schaltkulissenartige Führung bildenden Nuten. Insbesondere ist an den Enden der ersten, zweiten und dritten Nut jeweils eine Rastposition angeformt. Die Rastpositionen sind insbesondere durch Einbuchtungen an den jeweiligen Enden gebildet und zwar derart, dass sich die Einbuchtungen in einem, insbesondere rechten, Winkel hin zu ein und derselben Seitenfläche des Grundelements erstrecken, wobei die Länge einer Einbuchtung mit dem Durchmesser des Führungselements korrespondiert, der parallel zur Führungsebene orientiert ist. Die Tiefe der Einbuchtungen erstreckt sich von der Deckfläche des Grundelements in Richtung der Grundfläche des Grundelements und ist insbesondere identisch mit der Tiefe der restlichen schaltkulissenartigen Führung, und somit den Nuten im Grundelement. Insbesondere ist das Führungselement des Befestigungselements, und damit das Befestigungselement selbst, formschlüssig und/oder reibschlüssig in einer Rastposition, in einer Einbuchtung, gehalten. Sofern vorhanden, dient die vierte Nut insbesondere dazu, das Führungselement zwischen der ersten, zweiten und dritten Nut und den zugehörigen Rastpositionen verschieben zu können.

In einer vorteilhaften Ausgestaltung der Erfindung ist das Führungselement als Mehrkant, insbesondere als Sechskant ausgestaltet und korrespondiert insbesondere mit den ebenfalls mehrkantig, insbesondere sechskantig ausgestalteten Rastpositionen der kulissenartigen Führung. Dadurch kann das Befestigungselement, sobald das Führungselement eine Rastposition erreicht hat, nicht mehr um die Achse, die mit der Flächennormalen der Deckfläche und/oder der Grundfläche korrespondiert, rotiert werden. Auch ist eine Rotation um eine anderweitig orientierte Rotationsachse nicht möglich. Damit das Befestigungselement rotiert werden kann, um bezüglich des Grundelements eine gewünschte Ausrichtung einzustellen, muss das Befestigungselement aus der jeweiligen Rastposition, in der es ortsfest gehalten ist, herausgebracht, und in eine der Nuten, in welcher es frei in der Führungsebene bewegt und rotiert werden kann, eingebracht werden.

Dadurch, dass in einer vorteilhaften Ausgestaltung der Erfindung eine mehrkantige Ausgestaltung des Führungselements mit einer mehrkantigen Ausgestaltung der Rastpositionen korrespondiert, korrespondiert die Anzahl der Rastpositionen, die das Befestigungselement bezüglich des Grundelements einnehmen kann, mit der Anzahl der das Befestigungselement oder eine Rastposition aufweisenden Seiten. Bei einer bevorzugten, sechskantigen Ausgestaltung des Führungselements und der Rastpositionen, kann also das Führungselement pro jeweiligem Rastelement sechs stabile Positionen bezüglich des Grundelements einnehmen. Eine Ausgestaltung mit weniger Kanten, wie dies beispielsweise eine Ausgestaltung als Vierkant darstellt, schränkt die möglichen Positionen ein, die das Befestigungselement bezüglich des Grundelements einnehmen kann. Hingegen bietet eine Ausgestaltung des Führungselements und der Rastpositionen als Vielkant deutlich mehr Einstellungsmöglichkeiten des Befestigungselements bezüglich des Grundelements, allerdings strebt mit steigender Kantenzahl und somit steigender Seitenzahl, das Führungselement und die Rastposition immer mehr hin zu einer kreisähnlichen Form, wodurch das Risiko eines ungewolltes Rotierens des Befestigungselements in einer Rastposition, insbesondere bei schweren Gegenständen, erhöht ist. Die Ausgestaltung als Sechskant ist somit bevorzugt, wenn auch nicht ausschließlich möglich.

In einer weiteren, erfindungsgemäßen Ausgestaltung, ist auf der Deckfläche des Grundelements des Befestigungssystems ein Deckelement angeordnet. Die Form des Deckelements korrespondiert insbesondere mit der Form der Deckfläche des Grundelements. Insbesondere weist das Deckelement in einer Richtung, die mit der Flächennormalen der Grund- und/oder der Deckfläche des Grundelements korrespondiert, eine Materialstärke auf, die um ein Mehrfaches geringer ist als die Höhe der Seitenflächen des Grundelements. Weiter umfasst das Deckelement eine das Deckelement in Richtung einer Flächennormalen des Deckelements, das Deckelement gänzlich durchbrechende, schaltkulissenartige Führung. Die Flächennormale des Deckelements korrespondiert insbesondere mit der Flächennormalen der Grund- und/oder der Deckfläche des Grundelements. Vorteilhafterweise korrespondiert die Ausgestaltung der schaltkulissenartigen Führung des Deckelements mit der Form der schaltkulissenartigen Führung des Grundelements derart, dass beide schaltkulissenartigen Führungen symmetrisch, insbesondere deckungsgleich zueinander ausgerichtet sind. Die Durchbrüche, die die schaltkulissenartige Führung des Deckelements bilden, weisen insbesondere geringere Durchbruchlängen und geringere Durchbruchbreiten auf, als die korrespondierenden Längen und Breiten der Nuten im Grundelement. Dadurch wird verhindert, dass das Führungselement des Befestigungselements in Richtung des Deckelements aus der kulissenartigen Führung heraustreten, respektive herausfallen kann. Anders ausgedrückt, dient das Deckelement als Anschlag für das Führungselement und beschränkt die Bewegungen des Führungselements auf die Führungsebene des Grundelements. Weiter weist das Befestigungselement eine insbesondere zylinderförmig ausgestaltete Hinterschneidung auf, die insbesondere am Führungselement angeordnet ist, insbesondere den Haken mit dem Führungselement verbindet und in die schaltkulissenartige Führung des Deckelements eingreift. Die Hinterschneidung korrespondiert mit der Kulisse der schaltkulissenartigen Führung des Deckelements derart, dass das Befestigungselement über das Hakenelement klemmfrei in der schaltkulissenartigen Führung des Grundelements und des Deckelements bewegt werden kann.

Um das Befestigungssystem möglichst einfach an dem soliden Untergrund, insbesondere einer Wand, anzubringen, sieht eine weitere Ausgestaltung der Erfindung vor, dass das Grundelement ein Klebeelement aufweist. Dieses ist vorzugsweise an der Grundfläche des Grundelements angeordnet und derart ausgestaltet, dass es die Grundfläche zum Großteil bedeckt. Hierdurch ist eine stabile Befestigung des Befestigungssystems am soliden Untergrund gewährleistet. Alternativ, bei geringen zu befestigenden Lasten, kann das Klebeelement auch nur an wenigen oder einer einzigen Stelle, insbesondere an der Grundfläche des Grundelements, ausgebildet sein.

Eine weitere vorteilhafte Ausgestaltung des erfindungsgemäßen Befestigungssystems sieht vor, dass mehrere Befestigungselemente mit ihrem jeweiligen Führungselement in die schaltkulissenartige Führung des Grundelements einführbar sind. Hierfür ist es zweckmäßig, das Deckelement mit einer Einführmechanik zu versehen. Im einfachsten Fall ist die Einführmechanik als insbesondere kreisrunder Durchbruch im Deckelement ausgestaltet, welcher an die schaltkulissenartige Führung angrenzt. Das Führungselement eines weiteren Befestigungselements kann somit in den Durchbruch eingesetzt und in die schaltkulissenartige Führung eingeführt werden. Anschließend kann der Durchbruch, beispielsweise mit einem Stopfen oder einem ähnlichen Verschluss, verschlossen werden. Die Einführmechanik kann weiter aus einer Federmechanik bestehen, die bei einer Kraftbeaufschlagung in Richtung der Grundfläche des Grundelements die Öffnung freigibt. So kann das Führungselement eines Befestigungselements entgegen der Federkraft in Richtung der Grundfläche des Grundelements, in den Grundkörper eingedrückt und in die schaltkulissenartige Führung eingebracht werden. Ist das Befestigungselement in die schaltkulissenartige Führung eingebracht, "schnappt" der Federmechanismus in seine ursprüngliche Position zurück und verschließt das Deckelement derart, dass an dieser Stelle kein Befestigungselement unkontrolliert das Grundelement verlassen kann. Eine weitere Möglichkeit, ein weiteres Befestigungselement in die schaltkulissenartige Führung einzubringen, ist, eine Öffnung in einer der Seitenflächen des Grundelements oder des Deckelements zu schaffen, in welche ein Befestigungselement seitlich zum Grundelement, oder in einer Richtung entlang der Führungsebene, in die schaltkulissenartige Führung des Grund- und Deckelements einbringbar ist.

In einer weiteren bevorzugten Ausgestaltung der Erfindung sind das Grundelement und/oder das Befestigungselement aus einem Kunststoff gefertigt. Ohne jedoch den erfindungsgemäßen Gedanken zu verlassen, können sowohl das Befestigungselement als auch das Grundelement aus einem anderen Material, wie beispielsweise einem Metall oder auch Holz, gefertigt sein.

Die Erfindung wird nachfolgend anhand eines Ausführungsbeispiels erklärt.

Es zeigen:
- Figur 1: das erfindungsgemäße Befestigungssystem in perspektivischer Ansicht; und
- Figur 2: das erfindungsgemäße Befestigungssystem aus Figur 1 mit dargestelltem Deckelement.

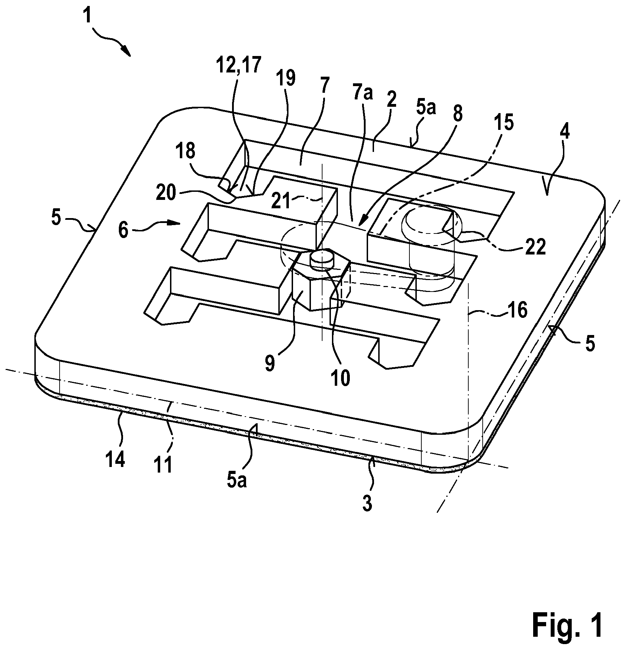

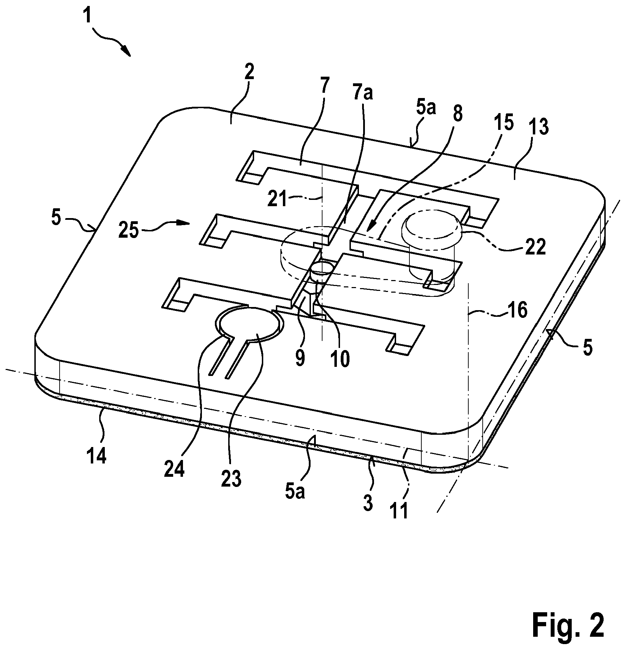

In den Figuren 1 und 2 ist ein erfindungsgemäßes Befestigungssystem 1 mit einem aus einem Kunststoff bestehenden Grundelement 2 und einem hakenartigen, ebenfalls aus einem Kunststoff bestehenden Befestigungselement 8, in perspektivischer Ansicht dargestellt, wobei ein Deckelement 13 nicht dargestellt ist, um die Geometrie des Grundelements 2 und des Befestigungselements 8 besser sichtbar zu machen. Das Befestigungselement 8 ist transparent dargestellt. Das Grundelement 2 weist die Gestalt eines Quaders mit einer Grundfläche 3, einer zur Grundfläche 3 parallel angeordnete Deckfläche 4, zwei kurze Seitenflächen 5 und zwei lange Seitenflächen 5a auf, wobei die kurzen Seitenflächen 5 jeweils parallel und die langen Seitenflächen 5a jeweils parallel zueinander angeordnet sind. Die Höhen der Seitenflächen 5, 5a, die sich zwischen der Grundfläche 3 und der Deckfläche 4 erstrecken, sind um ein Vielfaches geringer als eine Kantenlänge der Grundfläche 3 und/oder der Deckfläche 4. An den Übergängen von den kurzen zu den langen Seitenflächen 5, 5a des Grundelements 2 ist jeweils eine Abrundung angeordnet, deren Radius in etwa der Höhe einer Seitenfläche 5, 5a entspricht. Weiter weist das Grundelement 2 eine schaltkulissenartige Führung 6 auf. Diese ist im Wesentlichen durch drei parallele Nuten 7 und eine hierzu senkrechte, vierte Nut 7a gebildet, welche sich von der Deckfläche 4 in Richtung einer Flächennormalen 16, hin zur Grundfläche 3 erstrecken, wobei die Nuten 7, 7a und somit die schaltkulissenartige Führung 6, die Grundfläche 3 nicht durchstoßen. Die Nuten 7, 7a weisen bezüglich der Deckfläche 4 eine identische Tiefe auf. Die drei Nuten 7 weisen eine identische Länge auf und sind äquidistant zueinander und parallel zu den langen Seitenflächen 5a angeordnet. Die vierte Nut 7a verläuft parallel zu den kurzen Seitenflächen 5 und verbindet die Mitten der Nuten 7 miteinander. Die Länge der vierten Nut 7a ist durch die Breiten der parallelen Nuten 7 sowie durch die Summen deren äquidistanter Abstände zueinander bestimmt. Die Breiten der parallelen Nuten 7, also deren jeweilige Ausdehnung zwischen den Seitenflächen 5a, sind identisch. Weiter entspricht die Breite der vierten Nut 7a, also die Ausdehnung zwischen den Seitenflächen 5, den Breiten der parallelen Nuten 7.

An den Enden der parallelen Nuten 7 sind Rastpositionen 12 angeordnet. Insgesamt weist die schaltkulissenartige Führung 6 somit sechs Rastpositionen 12 auf. Die Rastpositionen 12 sind durch Einbuchtungen 17 gebildet, die sich an den Enden der jeweiligen Nut 12, in einem rechten Winkel von der Nut 12 in Richtung einer langen Seitenfläche 5a, erstrecken. Anders gesagt sind alle Einbuchtungen 17 und somit alle Rastpositionen 12 in ein und dieselbe Richtung orientiert. Die Einbuchtungen 17 sind derart ausgebildet, dass die Einbuchtungen 17 sich zwar in Richtung einer benachbarten Nut 7 erstrecken, aber nicht mit dieser in Kontakt treten. Somit besteht zwischen den einzelnen parallelen Nuten 7 ein direkter Kontakt nur durch die vierte Nut 7a. Die Einbuchtungen 17 und somit die Rastpositionen 12, weisen die gleiche Tiefe wie die Nuten 7, 7a auf. Weiter sind die Breiten der jeweiligen Einbuchtungen 17, also deren Ausdehnungen zwischen den Seitenflächen 5, geringer als die Breiten der Nuten 7, 7a. An einem Ende der Einbuchtungen 17 ist jeweils eine erste Fläche 18 und eine zweite Fläche 19 angeordnet, derart, dass die Einbuchtungen 17 spitz zulaufen. Beide Flächen 18, 19 sind identisch und weisen bezüglich einer Stoßkante 20 zueinander einen Winkel von 120° auf. Die Orientierung der Stoßkante 20, an welcher sich die erste Fläche 18 und die zweite Fläche 19 berühren, korrespondiert mit der Flächennormalen 16.

Das in der schaltkulissenartigen Führung 6 geführte, hakenartige Befestigungselement 8 umfasst ein Führungselement 9, einen Haken 15 sowie eine zwischen dem Führungselement 9 und dem Haken 15 angeordnete, zylindrische Hinterschneidung 10, die auch als Verjüngung aufgefasst werden kann. Das Führungselement 9 weist die Form eines hexagonalen Prismas auf, dessen Höhe, die sich in Richtung der Flächennormalen 16 erstreckt , geringfügig kleiner ist als die Tiefe der Nuten 7, 7a. Der Haken 15 weist außerdem ein Hakenelement 22 mit einem Wulst zur Anbringung eines aufzuhängenden Objektes (nicht dargestellt) auf. Das Hakenelement 22 ist radial bezüglich einer Rotationsachse 21, die im Zentrum des Führungselements 9 angeordnet ist und mit der Flächennormalen 16 korrespondiert, beabstandet und erstreckt sich in eine Richtung, welche von der Deckfläche 4 abgewandt ist, in Richtung der Flächennormalen 16. Das Führungselement 9 des hakenartigen Befestigungselements 8 und somit das hakenartige Befestigungselement 8 selbst, ist in der schaltkulissenartigen Führung 6 in einer Führungsebene 11, welche sich parallel zu der Grundfläche 3 und der Deckfläche 4 erstreckt, verschiebbar und um 360° um die Rotationsache 21 rotierbar. Durch Einbringen des Führungselements 9 in eine der Rastpositionen 12 kann das als hexagonales Prisma ausgestaltete Führungselement 9 mit der jeweiligen Rastposition 12 derart korrespondieren, dass das hakenartige Befestigungselement 8 bezüglich des Grundelements 2 sechs, in jeweils 60°-Schritten zueinander verschiedene, Stellungen einnehmen kann. In einer Rastposition 12 kann das hakenartige Befestigungselement 8 nicht rotiert werden und ist leicht klemmend gehalten.

In Figur 2 ist das gleiche Befestigungssystem 1 wie in Figur 1, jedoch mit dem plattenartigen Deckelement 13 dargestellt, welches mit der Form und der Größe der Deckfläche 4 korrespondiert. Weiter weist das Deckelement 13 eine Ausnehmung 25 auf, welche symmetrisch bezüglich der schaltkulissenartigen Führung 6 orientiert ist, jedoch geringere Längen und Breiten aufweist. Die Breiten der Ausnehmung 25 korrespondieren mit der Hinterschneidung 10 am hakenartigen Befestigungselement 8 derart, dass die Ränder der Ausnehmung 25 in die Hinterschneidung 10 eingreifen und verhindern, dass das hakenartige Befestigungselement 8, und somit das Führungselement 9 des hakenartigen Befestigungselements 8, aus der schaltkulissenartigen Führung 6 herausfallen kann. Zudem fördert die Ausnehmung 25 eine verklemmungsfreie und benutzerfreundliche Verschieblichkeit des hakenartigen Befestigungselements 8 in den schaltkulissenartigen Führungen 6. Das Deckelement 13 kann stoffschlüssig auf die Deckfläche 4, beispielsweise durch Kleben, aufgebracht sein.

Um zusätzlich oder nachträglich ein hakenartiges Befestigungselement 8 in die schaltkulissenartigen Führungen 6 einbringen zu können, weist das Deckelement 13 einen Federmechanismus 23 auf. Durch eine Kraftbeaufschlagung auf den Federmechanismus 23 in Richtung der Grundfläche 3, gibt der Federmechanismus 23, solange eine Kraft auf diesen wirkt, eine Öffnung 24 im Deckelement 13 frei. Somit kann beispielsweise ein weiteres hakenartiges Befestigungselement 8 in die schaltkulissenartige Führung 6 eingebracht, aber auch entfernt werden. Durch den Federmechanismus 23 ist gewährleistet, dass das hakenartige Befestigungselement 8 nicht die schaltkulissenartige Führung 6 verlassen kann, da, sobald die Kraftbeaufschlagung auf den Federmechanismus 23 nicht mehr vorhanden ist, der Federmechanismus 23 die Öffnung 24 wieder verschließt. Die Position des Federmechanismus 23 im Deckelement 13 ist beispielhaft. Der Federmechanismus 23 kann an anderen Positionen des Deckelements 13 angeordnet sein.

Zur Anbringung des Befestigungssystems 1 an einer Wand (nicht dargestellt) ist an der Grundfläche 3 des Grundelements 2 ein flächig ausgestaltetes Klebeelement 14 angebracht. Dieses kann beispielsweise durch eine abziehbare Schutzfolie (nicht dargestellt) abgedeckt sein, um ein ungewolltes/unbeabsichtigtes Ankleben des Befestigungssystems 1 zu verhindern. Kurz vor dem Anbringen an beispielsweise einer Wand, kann die Schutzfolie von dem Klebeelement 14 entfernt und das Befestigungssystem 1 an die Wand angeklebt werden. Um eine möglichst effiziente Nutzung des Befestigungssystems 1 zu gewährleisten, sollte bei der Montage an einer Wand darauf geachtet werden, dass die Einbuchtungen in Richtung Erde orientiert sind.

### Bezugszeichenliste

### Befestigungssystem mit schaltkulissenartiger Führung

- 1: Befestigungssystem
- 2: Grundelement
- 3: Grundfläche
- 4: Deckfläche
- 5, 5a: Seitenfläche
- 6: schaltkulissenartige Führung
- 7,7a: Nut
- 8: hakenartiges Befestigungselement
- 9: Führungselement des hakenartigen Befestigungselements 8
- 10: Hinterschneidung am hakenartigen Befestigungselement 8
- 11: Führungsebene
- 12: Rastpositionen
- 13: Deckelement
- 14: Klebeelement
- 15: Haken
- 16: Flächennormale
- 17: Einbuchtung
- 18: erste Fläche
- 19: zweite Fläche
- 20: Stoßkante
- 21: Rotationsachse
- 22: Hakenelement mit Wulst
- 23: Federmechanismus
- 24: Öffnung
- 25: Ausnehmung

## Patentansprüche

1. Befestigungssystem (1) zur, insbesondere positionsvariablen, Befestigung eines Objektes an einem soliden Untergrund, insbesondere einer Wand, umfassend ein Grundelement (2) mit einer schaltkulissenartigen Führung (6), ein insbesondere hakenartiges Befestigungselement (8) mit einem Führungselement (9), wobei das Führungselement (9) des Befestigungselements (8) in der schaltkulissenartigen Führung (6) in einer Führungsebene verschiebbar geführt ist, **dadurch gekennzeichnet, dass** das Befestigungselement (8) durch das Führungselement (9) an einer Rastposition (12) der schaltkulissenartigen Führung (6), einrastbar ist.

2. Befestigungssystem (1) nach Anspruch 1, **dadurch gekennzeichnet, dass** die schaltkulissenartige Führung (6) des Grundelements (2) mehrere Rastpositionen (12) aufweist, in welche das Führungselement (9) des insbesondere hakenartigen Befestigungselements (8) einrastbar ist.

3. Befestigungssystem (1) nach Anspruch 1 oder 2, **dadurch gekennzeichnet, dass** das Führungselement (9) als Mehrkant, insbesondere als Sechskant, ausgebildet ist und mit der Ausgestaltung der Rastpositionen (12) der schaltkulissenartigen Führung (6) derart korrespondiert, dass in einer Raststellung das Führungselement (9) nicht verdrehbar ist.

4. Befestigungssystem (1) nach Anspruch 3, **dadurch gekennzeichnet, dass** das Führungselement (9) des insbesondere hakenartigen Befestigungselements (8) in einer Rastposition (12) der schaltkulissenartigen Führung (6) mehrere, insbesondere sechs, Raststellungen bezüglich des Grundelements (2) einnehmen kann.

5. Befestigungssystem (1) nach einem der vorangegangenen Ansprüche, **dadurch gekennzeichnet, dass** das Grundelement (2) ein Deckelement (13) aufweist, das mit einer Hinterschneidung (10) am insbesondere hakenartigen Befestigungselement (8) korrespondiert und das insbesondere hakenartige Befestigungselement (8) in der schaltkulissenartigen Führung (6) hält.

6. Befestigungssystem (1) nach einem der vorangegangenen Ansprüche, **dadurch gekennzeichnet, dass** das Grundelement (2) ein Klebeelement (14) zur Anbringung an einem soliden Untergrund, insbesondere einer Wand, aufweist.

7. Befestigungssystem (1) nach einem der vorangegangenen Ansprüche, **dadurch gekennzeichnet, dass** mehrere insbesondere hakenartige Befestigungselemente (8) mit ihrem jeweiligen Führungselement (9) in die schaltkulissenartige Führung (6) des Grundelements (2) einführbar sind.

8. Befestigungssystem (1) nach einem der vorangegangenen Ansprüche, **dadurch gekennzeichnet, dass** das Grundelement (2) und/oder das insbesondere hakenartige Befestigungselement (8) aus einem Kunststoff bestehen.
